# EUROPEAN PATENT SPECIFICATION

(11) **EP 3 316 237 B1**
(45) Date of publication and mention of the grant of the patent: **21.06.2023**
(21) Application number: 15896600.2
(22) Date of filing: 20.10.2015
(51) Int. Cl.: G06F 3/041, G06F 3/044, G09G 3/36

(54) **EMBEDDED TOUCH CONTROL DISPLAY SCREEN AND DRIVE METHOD THEREFOR, AND DISPLAY DEVICE**
EINGEBETTETER BERÜHRUNGSBILDSCHIRM UND ANSTEUERUNGSVERFAHREN DAFÜR SOWIE ANZEIGEVORRICHTUNG
ÉCRAN D'AFFICHAGE À COMMANDE TACTILE INTÉGRÉE ET PROCÉDÉ D'ATTAQUE ASSOCIÉ AINSI QUE DISPOSITIF D'AFFICHAGE

(30) Priority: 29.06.2015 CN 201510369808
(43) Date of publication of application: 02.05.2018
(73) Proprietor: BOE Technology Group Co., Ltd., Beijing 100015 (CN); Beijing BOE Optoelectronics Technology Co., Ltd., Beijing 100176 (CN)
(72) Inventor: DING, Xiaoliang, Beijing 100176 (CN); DONG, Xue, Beijing 100176 (CN); WANG, Haisheng, Beijing 100176 (CN); CHEN, Xiaochuan, Beijing100176 (CN); LIU, Hongjuan, Beijing 100176 (CN); YANG, Shengji, Beijing 100176 (CN); LIU, Yingming, Beijing 100176 (CN); ZHAO, Weijie, Beijing 100176 (CN); LI, Changfeng, Beijing 100176 (CN); LIU, Wei, Beijing 100176 (CN); WANG, Lei, Beijing 100176 (CN); XU, Rui, Beijing 100176 (CN); REN, Tao, Beijing 100176 (CN); XIE, Xiaobo, Beijing 100176 (CN)
(74) Representative: Fritzsche, Thomas
(86) International application number: PCT/CN2015/092286
(87) International publication number: WO 2017/000432

(56) References cited:
- CN-A- 103 034 386
- CN-A- 103 761 014
- CN-A- 104 166 489
- CN-A- 104 423 757
- CN-A- 104 882 092
- KR-A- 20110 070 097
- TW-A- 201 236 127
- US-A1- 2014 111 466

## Description

### TECHNICAL FIELD

The present disclosure relates to the field of displays, and particularly to an in-cell touch display, a drive method thereof, and a display device.

### BACKGROUND

At present, touch displays, as input devices, provide a user with better interaction experience as compared with keyboards and mice. According to their implementation principles, touch displays may be classified into resistive touch displays, capacitive touch displays, surface acoustic wave touch displays, infrared touch displays and the like. Currently, the resistive type and capacitive type touch display technologies are used extensively.

The capacitive touch display draws more and more concerns due to its advantages such as higher sensitivity and capability of multi-point touch control. A basic principle of the capacitive touch display is as follows: a drive voltage is applied to a driving signal line, and a signal change is detected on a sensing signal line. The driving signal line determines a coordinate in an X-axis direction, and the sensing signal line determines a coordinate in a Y-axis direction. As such, each of intersections of the driving signal lines and the sensing signal lines corresponds to a respective coordinate. In the touch control phase, the driving signal lines in the X-axis direction are scanned line by line, and a signal on each sensing signal line is read while each of the driving signal lines is scanned. Each of the intersections may be scanned through one round of scanning. Assume that the scanning is performed x^{∗}y times, wherein x represents the number of driving signal lines, and y represents the number of sensing signal lines, then there are totally x^{∗}y intersections of the driving signal lines and the sensing signal lines. Such detection manner may be used to determine multi-point coordinates, thereby implementing multi-point touch.

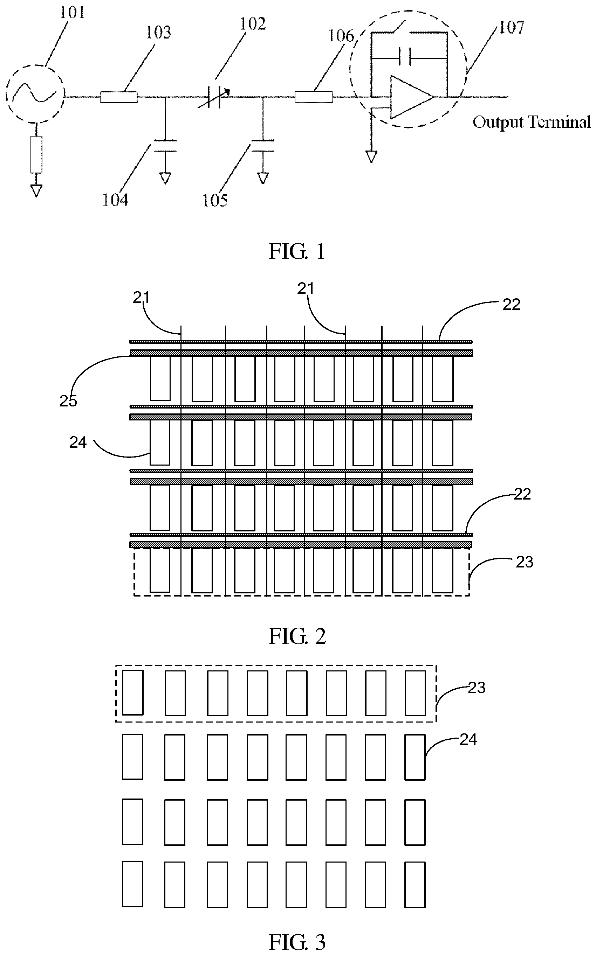

FIG. 1 is a schematic diagram of the detection principle of a touch display in the prior art, wherein 101 represents a signal source, 103 represents a resistor of the driving signal line, 102 represents a mutual capacitance between the driving signal line and the sensing signal line, 104 represents a parasitic capacitance between the driving signal line and a common electrode layer, 105 represents a parasitic capacitance between the sensing single line and the common electrode layer, 106 represents a resistor of the sensing signal line, and 107 represents a detection circuit. When a finger touches the touch display, a portion of current is drained off by the finger, which is equivalent to a change in the mutual capacitance 102 between the driving signal line and the sensing signal line. A weak change in the current that is caused by the finger draining off the current may be detected by the detection circuit 107, and thereby a touch control position may be determined.

However, the capacitive touch display that is applied most extensively at present is the add-on touch display where a touch panel and a liquid crystal display (LCD) are produced separately and then adhered to each other. Due to a series of factors such as high manufacturing cost, low light transmittance and a large module thickness, use of such prior art touch displays is limited.

TW 201236127 A discloses a touch sensor integrated display device comprising gate lines and data lines formed on a substrate to be intersected with each other, a plurality of pixel electrodes formed at intersections between the gate lines and the data lines, and a common electrode formed to overlap the plurality of pixel electrodes through an insulating film disposed between the common electrode and the plurality of pixel electrodes, wherein the common electrode includes at least two touch electrodes, each of which is connected to at least one of signal lines arranged in one of a first direction and a second direction crossing the first direction.

US 20140111466 A1 discloses a display device integrated with a touch screen, in which the data lines are used as the touch driving electrodes, and the common electrodes are used as the touch sensing electrodes for touch sensing.

CN 104166489 A discloses a display panel and a display device including the same. The display panel includes: a gate line and a common electrode structure extended along a first direction; and a data line extended along a second direction. The gate line, the common electrode structure, and the data line are intercrossed with each other and correspond to a sub-pixel. One end of the data line is connected with a source driving circuit and the other end of the data line is connected with a touch sensing terminal; and one end of the common electrode structure is connected with a common voltage input terminal and the other end of the common electrode structure is connected with a touch transmitting terminal.

### SUMMARY

Embodiments of present disclosure provide an in-cell touch display, a drive method thereof, and a display device, which achieve a thinner screen thickness, lower manufacturing cost and higher light transmittance.

According to a first aspect of the present disclosure, an in-cell touch display is provided comprising: a color filter substrate; and an array substrate comprising data lines and gate lines insulated from and intersecting with each other, a plurality of connection lines, and a plurality of common electrode regions, each of the plurality of common electrode regions comprising a plurality of common electrode blocks arranged in a matrix and connected with each other via a respective one of the plurality of connection lines. The touch display is configured such that, when the touch display is in a display phase, each common electrode region is supplied with a common electrode signal via the respective connection line, and the data lines are supplied with respective data signals. The touch display is further configured such that, when the touch display is in a touch control phase, the plurality of common electrode blocks in each common electrode region serve as touch control driving electrodes and being supplied with a touch control driving signal through the respective connection line, and at least a portion of the data lines serve as touch control sensing signal lines for transmission of generated touch control sensing signals.

The array substrate further comprises a plurality of sub-pixel cells each comprising a pixel electrode, and wherein each of the common electrode blocks corresponds to a respective pixel electrode.

A projection of each of the common electrodes on the array substrate does not overlap projections of the data lines and the gate lines on the array substrate.

Optionally, the common electrode blocks are arranged on the same layer as the gate lines or the data lines.

Optionally, the connection lines are arranged on the same layer as the common electrode blocks; or the connection lines are located above the common electrode blocks; or the connection lines are located below the common electrode blocks.

Optionally, the connection lines are arranged on the same layer as the gate lines and insulated from the gate lines.

Optionally, the connection lines are made of a metallic material.

Optionally, the touch display further comprises a plurality of touch control driving signal channels for supplying the plurality of connection lines with the touch control driving signals, each touch control driving signal channel being connected with at least one connection line.

Optionally, the touch display further comprises a plurality of touch control sensing signal channels for acquiring the generated touch control sensing signals from the at least a portion of the data lines serving as the touch control sensing signal lines, each touch control sensing signal channel being connected with at least one data line.

Optionally, the number of the plurality of touch control driving signal channels and the plurality of touch control sensing line channels is determined according to a desired touch control resolution.

Optionally, the touch display further comprises a plurality of switching elements configured to operate selectively depending on whether the touch display is in a display phase or a touch control phase, such that the at least a portion of the data lines serving as the touch control sensing signal lines are supplied with the data signals in the display phase and transmit the generated touch control sensing signals in the touch control phase.

Optionally, each of the plurality of switching elements is an analog switch.

According to a second aspect of the present disclosure, a method of driving the in-cell touch display as described in the first aspect is further provided, comprising: when the touch display is in the display phase, supplying the common electrode signals to the connection lines, and supplying the data signals to the data lines; and when the touch display is in the touch control phase, supplying the touch control driving signals to the connection lines, and transmitting the generated touch control sensing signals through the at least a portion of the data lines serving as the touch control sensing signal lines.

According a third aspect of the present disclosure, a display device is further provided comprising the in-cell touch display as described in the first aspect.

Embodiments of the present disclosure have the advantages that the thickness of the touch display may be reduced, the light transmittance of the screen may be increased, and the manufacturing cost may be decreased, with the common electrode blocks being reused as touch control driving electrodes, and the data lines as touch control sensing signal lines.

### BRIEF DESCRIPTION OF THE DRAWINGS

FIG. 1 is a schematic diagram of the detection principle of a touch display in the prior art;
FIG. 2 is a structural schematic view of an in-cell touch display according to an embodiment of the present disclosure;
FIG. 3 is a schematic top view of a common electrode region in an in-cell touch display according to an embodiment of the present disclosure;
FIG. 4 is a schematic top view of a common electrode region in another in-cell touch display according to an embodiment of the present disclosure;
FIG. 5 is a schematic view of the wiring of gate lines and connection lines in an in-cell touch display according to an embodiment of the present disclosure;
FIG. 6 is a structural schematic view of an in-cell touch display according to an embodiment of the present disclosure;
FIG. 7 is a structural schematic view of a display/touch control function switching member in an in-cell touch display according to an embodiment of the present disclosure;
FIG. 8 is a flow chart of a method of driving an in-cell touch display according to an embodiment of the present disclosure; and
FIG. 9 is a schematic waveform diagram of a touch control driving signal and a common electrode signal for an in-cell touch display according to an embodiment of the present disclosure.

### DETAILED DESCRIPTION

The present disclosure will be described in detail with reference to the drawings to make objectives, technical solutions and advantages of the present disclosure more apparent.

FIG. 2 is a structural schematic view of an in-cell touch display according to an embodiment of the present disclosure. The in-cell touch display may be based on an In-Plane Switch (IPS) technology or an Advanced Super Dimension Switch (ADS) technology where a common electrode is disposed on the array substrate. More specifically, the touch display may comprise an array substrate and a color filter substrate (not shown). The array substrate comprises data lines 21 and gate lines 22 which are insulated from and intersected with each other, a plurality of connection lines 25, and a plurality of common electrode regions 23. Each common electrode region 23 comprises a plurality of common electrode blocks 24 arranged in a matrix, and the plurality of common electrode blocks 24 in each common electrode region 23 are connected via a respective connection line 25.

When the display is in a display phase, each common electrode region 23 is supplied with a common electrode signal via the respective connection line 25, and the data lines 21 are supplied with respective data signals. When the display is in a touch control phase, the common electrode blocks 24 in each common electrode region 23 are used as touch control driving electrodes and supplied with a touch control driving signal through the respective connection line 25, and at least a portion of the data lines 21 are used as touch control sensing signal lines for transmission of generated touch control sensing signals.

In the embodiment, the common electrode is divided into blocks with a sub-pixel cell as a unit, and each common electrode block may correspond to a pixel electrode of a corresponding sub-pixel cell. In the text, the so-called sub-pixel cell is a region surrounded by the data line and the gate line which are insulated from and intersected with each other. Each sub-pixel cell comprises a thin film transistor (TFT), of which the gate is connected with the gate line, the source with the data line, and the drain with the pixel electrode. Since the common electrode is divided into blocks, the load of each data line is smaller, such that the in-cell touch display is suitable for applications of large-sized panels. However, embodiments of the present disclosure are not limited to the applications of large-sized panels.

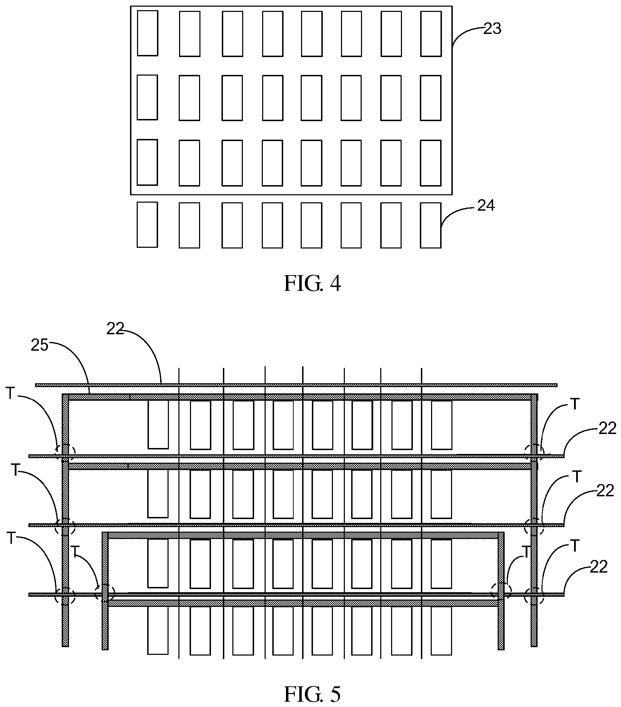

FIGS. 3 and 4 show schematic top views of two types of exemplary common electrode regions. In the example shown in FIG. 3, each common electrode region 23 comprises a row of common electrode blocks 24 arranged in a matrix. In the example shown in FIG. 4, each common electrode region 23 comprises three rows of common electrode blocks 24 arranged in a matrix. Of course, each common electrode region 23 may comprise more or less rows of common electrode blocks 24. Especially, a projection of each common electrode block 24 on the array substrate does not overlap projections of the data lines 21 and the gate lines 22 on the array substrate. This facilitates reduction of the parasitic capacitance between the common electrode blocks 24 and the data lines 21 and the parasitic capacitance between the common electrode blocks 24 and the gate lines 22. Since the common electrode blocks 24 are reused as touch control driving electrodes, and (at least a portion of) the data lines 21 as touch control sensing signal lines, the parasitic capacitance between the touch control driving electrodes and the touch control sensing signal lines, and thus the time delay caused in transmission of the touch control driving signal by the touch control driving electrodes, are also reduced, thereby improving the accuracy of touch control detection. Generally, the data line does not affect the aperture ratio of the display, so reusing the data lines as the touch control sensing signal lines does not affect the aperture ratio of the touch display. In addition, as the common electrode blocks 24 are disposed in one-to-one correspondence with the pixel electrodes, there is no need for an extra mask plate, thus reducing the production cost.

By way of example, and not limitation, the common electrode blocks 24 may be arranged on the same layer as the gate lines 22. Alternatively, the common electrode blocks 24 may be arranged on the same layer as the data lines 21. Moreover, the connection lines 25 and the common electrode blocks 24 may be arranged on the same layer. Alternatively, the connection lines 25 may be located above or below the common electrode blocks 24. No insulating layer is needed between the common electrode blocks 24 and the connection lines 25, because the common electrode blocks 24 may be connected directly with the connection lines 25. Especially, when the connection lines 25 and the common electrode blocks 24 are not arranged on the same layer, each row of common electrode blocks 24 may be connected with the connection lines 25 through a via. The connection lines 25 may also be arranged on the same layer as the gate lines 22 and insulated from the gate lines 22. In this case, the connection lines 25 may be made of the same metallic material as the gate line 22, such as aluminum, copper, and the like.

FIG. 5 is a schematic view of the wiring of gate lines and connection lines in an in-cell touch display according to an embodiment of the present disclosure. When the connection lines 25 and gate lines 22 are arranged on the same layer, they may contact with each other. As shown in FIG. 5, there is a crossing region T between the first connection line 25 and the second gate line 22. To avoid the contact between the connection line 25 and the gate line 22, the gate line 22 and the connection line 25 may be connected at the region T through a source-drain metallic layer of a TFT in a jumper wiring manner. Specifically, the gate line 22 may be wired at the region T through a jumper of the source-drain metallic layer of the TFT, or the connection line 25 may be wired at the region T through a jumper of the source-drain metallic layer of the TFT.

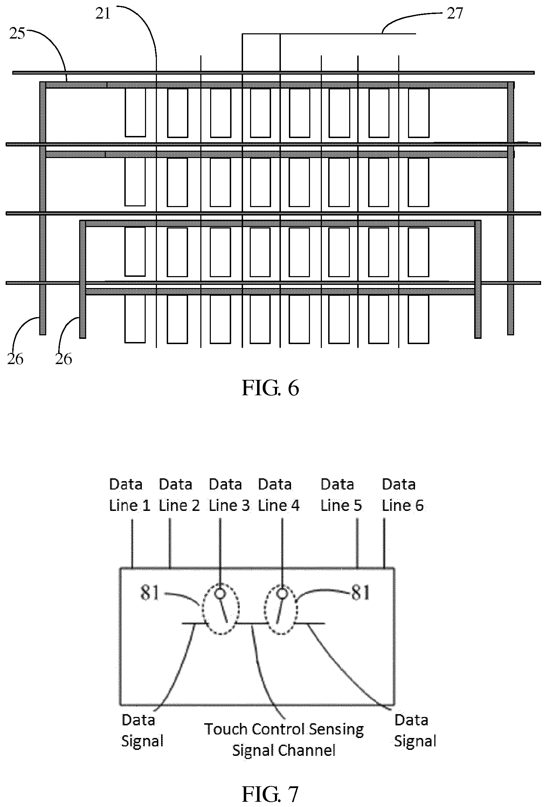

FIG. 6 is a structural schematic view of an in-cell touch display according to an embodiment of the present disclosure. The touch display further comprises a plurality of touch control driving signal channels 26 for supplying the touch control driving signals, and a plurality of touch control sensing signal channels 27 for acquiring the generated touch control sensing signals. One touch control driving signal channel 26 may be connected with one or more (adjacent) connection lines 25, and one touch control sensing signal channel 27 may be connected with one or more (adjacent) data lines 21. In the example as shown in FIG. 6, the first and second rows of connection lines 25 are connected with a single one touch control driving signal channel 26, and the third and fourth columns of data lines 21 are connected with a single one touch control sensing signal channel 27.

The number of touch control driving signal channels 26 and the number of connection lines 25 connected with each touch control driving signal channel 26 may be determined according to a desired touch control precision. In an example, a touch control driving signal channel 26 may be connected with a plurality of adjacent connection lines 25 such that a distance between the first connection line and the last connection line that are connected with the touch control driving signal channel 26 is 5 mm to 7 mm. Generally, assume that m represents a distance between the first connection line and the last connection line that are connected with one touch control driving signal channel, n represents a distance between two adjacent connection lines, and x represents the number of connection lines to be connected by one touch control driving signal channel, then x=m/n.

Similarly, the number of touch control sensing signal channels 27 and the number of connection lines 21 connected with each touch control sensing signal channel 27 may be determined according to a desired touch control precision. Specifically, assume that a represents a width of a touch display, b represents a distance between two adjacent touch control sensing signal channels 27, and c represents the number of the desired touch control sensing signal channels 27, then c=a/b. Further, the number of data lines 21 connected by each touch control sensing signal channel 27 may be determined according to a distance between two adjacent columns of data lines 21 and a distance between the first column of data line and the last column of data line that are connected with one touch control sensing signal channel 27. Specifically, assume that d represents the distance between two adjacent columns of data lines, e represents the distance between the first column of data line and the last column of data line that are connected with one touch control sensing signal channel 27, and f represents the number of data lines 21 connected with one touch control sensing signal channel 27, then f=e/d.

FIG. 7 is a structural schematic view of a display/touch control function switching member in an in-cell touch display according to an embodiment of the present disclosure. Continuing with the example shown in FIG. 6, the third column of data line and the fourth column of data line are reused as the touch control sensing signal lines. As shown in FIG. 7, the display/touch control function switching member may be a switching element 81. The switching element 81 operates selectively depending on whether the display is in a display phase or a touch control phase, such that the at least a portion of the data lines 21 serving as the touch control sensing signal lines are supplied with the data signals in the display phase and transmit the generated touch control sensing signals in the touch control phase. Specifically, when the touch display is in the touch phase, the switching element 81 is controlled by a control circuit to supply the data signal to the corresponding data line 21, and when the touch display is in the touch control phase, the switching element 81 is controlled by the drive circuit to connect the corresponding data line 21 to the touch control sensing signal channel to transmit the generated touch control sensing signal.

According to another aspect of the present disclosure, a display device is further provided comprising the above-mentioned in-cell touch display. Details of the in-cell touch display have been described above, and will not be repeated here.

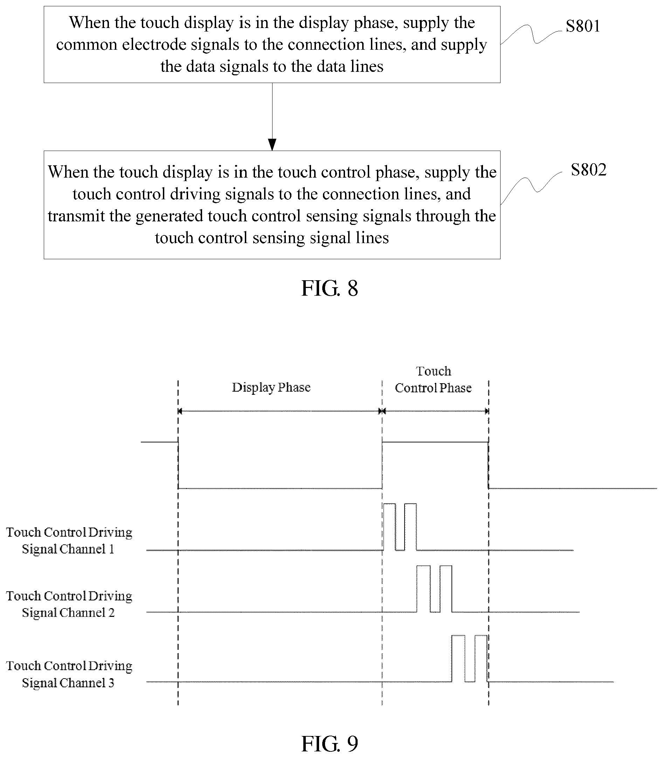

FIG. 8 is a flow chart of a method of driving an in-cell touch display according to an embodiment of the present disclosure. As shown in FIG. 8, the method comprises the following steps.

At S801, when the touch display is in the display phase, the common electrode signals are supplied to the connection lines, and the data signals are supplied to the data lines.

At S802, when the touch display is in the touch control phase, the touch control driving signals are supplied to the connection lines, and the generated touch control sensing signals are transmitted through the at least a portion of the data lines serving as the touch control sensing signal lines.

FIG. 9 is a schematic waveform diagram of a touch control driving signal and a common electrode signal for an in-cell touch display according to an embodiment of the present disclosure. As shown in FIG. 9, when the touch display is in the display phase, the touch control driving signal channels each receive a common electrode signal (Vcom) provided by the drive circuit to supply a display voltage to the common electrode blocks connected with the touch control driving signal channel, and when the touch display is in the touch control phase, the touch control driving signal channels each receive a touch control driving signal (shown as a square-wave signal in the figure) provided by the drive circuit to supply a touch control driving signal to the common electrode blocks connected with the touch control driving signal channel.

As is shown, a period (V-sync) for each frame of the touch display is divided into a display phase and a touch control phase. For example, if a time interval for displaying a frame of the touch display is 16.7 ms, then 5 ms may be selected as the touch control phase, and the remaining 11.7 ms as the display phase. Other alternatives are also possible.

While the disclosure has been illustrated and described in detail in the drawings and foregoing description, such illustration and description are to be considered illustrative or exemplary and not restrictive. The disclosure is not limited to the disclosed embodiments.

Various modifications and variations to embodiments of the present disclosure may be made by those skilled in the art without departing from the scope of the present disclosure.

## Claims

1. An in-cell touch display, comprising:
a color filter substrate; and
an array substrate comprising data lines (21) and gate lines (22) insulated from and intersecting with each other, a plurality of connection lines (25), a plurality of sub-pixel cells each comprising a pixel electrode, and a plurality of common electrode regions (23), each of the plurality of common electrode regions (23) comprising a plurality of common electrode blocks (24) arranged in a matrix and connected with each other via a respective one of the plurality of connection lines (25);
wherein each of the common electrode blocks (24) corresponds to a respective pixel electrode;
wherein the touch display is configured such that, when the touch display is in a display phase, each common electrode region (23) is supplied with a common electrode signal provided by a drive circuit to supply a display voltage via the respective connection line (25), and the data lines (21) are supplied with respective data signals;
wherein the touch display is further configured such that, when the touch display is in a touch control phase, the plurality of common electrode blocks (24) in each common electrode region (23) serve as touch control driving electrodes and are supplied with a touch control driving signal through the respective connection line (25), and at least one of the data lines (21) serves as a touch control sensing signal line for transmission of generated touch control sensing signals; and
**characterized in that** a projection of each of the common electrode blocks (24) on the array substrate does not overlap projections of the data lines (21) and the gate lines (22) on the array substrate.

2. The touch display according to claim 1, wherein the common electrode blocks (24) are arranged on the same layer as the gate lines (22) or the data lines (21).

3. The touch display according to claim 1, wherein the connection lines (25) are arranged on the same layer as the common electrode blocks (24); or the connection lines (25) are located above the common electrode blocks (24); or the connection lines (25) are located below the common electrode blocks (24).

4. The touch display according to claim 2 or 3, wherein the connection lines (25) are arranged on the same layer as the gate lines (22) and insulated from the gate lines (22).

5. The touch display according to claim 1, wherein the connection lines (25) are made of a metallic material.

6. The touch display according to claim 1, further comprising a plurality of touch control driving signal channels (26) for supplying the plurality of connection lines (25) with the touch control driving signals, each touch control driving signal channel (26) being connected with at least one connection line (25).

7. The touch display according to claim 6, further comprising a plurality of touch control sensing signal channels (27) for acquiring the generated touch control sensing signals from the data lines (21) serving as the touch control sensing signal lines, each touch control sensing signal channel (27) being connected with at least one data line (21).

8. The touch display according to claim 7, wherein the number of the plurality of touch control driving signal channels (26) and the plurality of touch control sensing signal channels (27) is determined according to a desired touch control resolution.

9. The touch display according to claim 1, further comprising a plurality of switching elements (81) configured to operate selectively depending on whether the touch display is in the display phase or the touch control phase, such that the data lines (21) serving as the touch control sensing signal lines are supplied with the data signals in the display phase and transmit the generated touch control sensing signals in the touch control phase.

10. The touch display according to claim 9, wherein each of the plurality of switching elements (81) is an analog switch.

11. A method of driving the in-cell touch display according to any one of claims 1-10, comprising:
when the touch display is in the display phase, supplying (S801) the common electrode signals to the connection lines, and supplying the data signals to the data lines;
wherein,
when the touch display is in the touch control phase, supplying (S802) the touch control driving signals to the connection lines, and transmitting the generated touch control sensing signals through the data lines serving as the touch control sensing signal lines.

12. A display device, comprising the in-cell touch display according to any one of claims 1-10.

## Patentansprüche

1. Zelleninterne Berührungsanzeige, umfassend:
ein Farbfiltersubstrat; und
ein Array-Substrat, umfassend Datenleitungen (21) und Gate-Leitungen (22), die voneinander isoliert sind und einander schneiden, eine Vielzahl von Verbindungsleitungen (25), eine Vielzahl von Subpixelzellen, die jeweils eine Pixelelektrode umfasst, und eine Vielzahl von gemeinsamen Elektrodenbereichen (23), wobei jeder aus der Vielzahl von gemeinsamen Elektrodenbereichen (23) eine Vielzahl von gemeinsamen Elektrodenblöcken (24) umfasst, die in einer Matrix angeordnet und miteinander über eine jeweilige aus der Vielzahl von Verbindungsleitungen (25) verbunden ist;
wobei jeder der gemeinsamen Elektrodenblöcke (24) einer jeweiligen Pixelelektrode entspricht;
wobei die Berührungsanzeige konfiguriert ist, sodass, wenn sich die Berührungsanzeige in einer Anzeigephase befindet, jedem gemeinsamen Elektrodenbereich (23) ein gemeinsames Elektrodensignal zugeführt wird, das durch eine Ansteuerschaltung bereitgestellt ist, um eine Anzeigespannung über die jeweilige Verbindungsleitung (25) zuzuführen, und den Datenleitungen (21) jeweilige Datensignale zugeführt werden;
wobei die Berührungsanzeige ferner konfiguriert ist, sodass, wenn sich die Berührungsanzeige in einer Berührungssteuerphase befindet, die Vielzahl von gemeinsamen Elektrodenblöcken (24) in jedem gemeinsamen Elektrodenbereich (23) als Berührungssteueransteuerelektroden dient und ihr ein Berührungssteueransteuersignal durch die jeweilige Verbindungsleitung (25) zugeführt wird, und mindestens eine der Datenleitungen (21) als eine Berührungssteuererfassungssignalleitung zur Übertragung von erzeugten Berührungssteuererfassungssignalen dient; und
**dadurch gekennzeichnet, dass** eine Projektion von jedem der gemeinsamen Elektrodenblöcke (24) auf dem Array-Substrat Projektionen der Datenleitungen (21) und der Gate-Leitungen (22) auf dem Array-Substrat nicht überlappt.

2. Berührungsanzeige nach Anspruch 1, wobei die gemeinsamen Elektrodenblöcke (24) auf der gleichen Schicht wie die Gate-Leitungen (22) oder die Datenleitungen (21) angeordnet sind.

3. Berührungsanzeige nach Anspruch 1, wobei die Verbindungsleitungen (25) auf der gleichen Schicht wie die gemeinsamen Elektrodenblöcke (24) angeordnet sind; oder sich die Verbindungsleitungen (25) über den gemeinsamen Elektrodenblöcken (24) befinden; oder sich die Verbindungsleitungen (25) unter den gemeinsamen Elektrodenblöcken (24) befinden.

4. Berührungsanzeige nach Anspruch 2 oder 3, wobei die Verbindungsleitungen (25) auf der gleichen Schicht wie die Gate-Leitungen (22) angeordnet und von den Gate-Leitungen (22) isoliert sind.

5. Berührungsanzeige nach Anspruch 1, wobei die Verbindungsleitungen (25) aus einem metallischen Material gefertigt sind.

6. Berührungsanzeige nach Anspruch 1, ferner umfassend eine Vielzahl von Berührungssteueransteuersignalkanälen (26) zum Zuführen der Berührungssteueransteuersignale zu der Vielzahl von Verbindungsleitungen (25), wobei jeder Berührungssteueransteuersignalkanal (26) mit mindestens einer Verbindungsleitung (25) verbunden ist.

7. Berührungsanzeige nach Anspruch 6, ferner umfassend eine Vielzahl von Berührungssteuererfassungssignalkanälen (27) zum Empfangen der erzeugten Berührungssteuererfassungssignale von den Datenleitungen (21), die als die Berührungssteuererfassungssignalleitungen dienen, wobei jeder Berührungssteuererfassungssignalkanal (27) mit mindestens einer Datenleitung (21) verbunden ist.

8. Berührungsanzeige nach Anspruch 7, wobei die Anzahl der Vielzahl von Berührungssteueransteuersignalkanälen (26) und der Vielzahl von Berührungssteuererfassungssignalkanälen (27) gemäß einer gewünschten Berührungssteuerauflösung bestimmt wird.

9. Berührungsanzeige nach Anspruch 1, ferner umfassend eine Vielzahl von Schaltelementen (81), die konfiguriert ist, um selektiv zu arbeiten, abhängig davon, ob sich die Berührungsanzeige in der Anzeigephase oder der Berührungssteuerphase befindet, sodass den Datenleitungen (21), die als die Berührungssteuererfassungssignalleitungen dienen, die Datensignale in der Anzeigephase zugeführt werden und sie die erzeugten Berührungssteuererfassungssignale in der Berührungssteuerphase übertragen.

10. Berührungsanzeige nach Anspruch 9, wobei jedes aus der Vielzahl von Schaltelementen (81) ein analoger Schalter ist.

11. Verfahren zum Ansteuern des zelleninternen Berührungsanzeige nach einem der Ansprüche 1-10, umfassend:
wenn sich die Berührungsanzeige in der Anzeigephase befindet, Zuführen (S801) der gemeinsamen Elektrodensignale zu den Verbindungsleitungen und Zuführen der Datensignale zu den Datenleitungen;
wobei,
wenn sich die Berührungsanzeige in der Berührungssteuerphase befindet, die Berührungssteueransteuersignale den Verbindungsleitungen zugeführt werden (S802) und die erzeugten Berührungssteuererfassungssignale durch die Datenleitungen, die als die Berührungssteuererfassungssignalleitungen dienen, übertragen werden.

12. Anzeigevorrichtung, umfassend die zelleninterne Berührungsanzeige nach einem der Ansprüche 1-10.

## Revendications

1. Écran tactile in-cell, comprenant :
un substrat de filtre coloré ; et
un substrat de matrice comprenant des lignes de données (21) et des lignes de grille (22) isolées les unes des autres et se croisant les unes les autres, une pluralité de lignes de connexion (25), une pluralité de cellules de sous-pixel comprenant chacune une électrode de pixel, et une pluralité de régions d'électrodes communes (23), chacune de la pluralité de régions d'électrodes communes (23) comprenant une pluralité de blocs d'électrodes communs (24) disposés dans une matrice et connectés les uns aux autres via leur propre pluralité de lignes de connexion (25) ;
dans lequel chaque bloc d'électrodes commun (24) correspond à sa propre électrode de pixel ;
dans lequel l'écran tactile est configuré de sorte que, lorsque l'écran tactile est dans une phase d'affichage, chaque région d'électrodes commune (23) reçoive un signal d'électrode commun émis par un circuit de commande pour fournir une tension d'affichage via sa propre ligne de connexion (25), et les lignes de données (21) reçoivent leurs propres signaux de données ;
dans lequel l'écran tactile est en outre configuré de sorte que, lorsque l'écran tactile est dans une phase de commande tactile, la pluralité de blocs d'électrodes communs (24) dans chaque région d'électrodes commune (23) servent d'électrodes de transmission de commandes tactiles et soient alimentés par un signal de transmission à commande tactile via leur propre ligne de connexion (25), et au moins l'une des lignes de données (21) serve de ligne de signal de détection de commandes tactiles pour la transmission des signaux de détection des commandes tactiles générés ; et
**caractérisé par** le non-chevauchement d'une projection de chacun des blocs d'électrodes communs (24) sur le substrat de réseau avec les projections des lignes de données (21) et des lignes de grille (22) sur le substrat de réseau.

2. Écran tactile selon la revendication 1, dans lequel les blocs d'électrodes communs (24) sont disposés sur la même couche que les lignes de grille (22) ou les lignes de données (21).

3. Écran tactile selon la revendication 1, dans lequel les lignes de connexion (25) sont disposées sur la même couche que les blocs d'électrodes communs (24) ; ou les lignes de connexion (25) sont situées au-dessus des blocs d'électrodes communs (24) ; ou les lignes de connexion (25) sont situées sous les blocs d'électrodes communs (24).

4. Écran tactile selon la revendication 2 ou 3, dans lequel les lignes de connexion (25) sont disposées sur la même couche que les lignes de grille (22) et isolées des lignes de grille (22).

5. Écran tactile selon la revendication 1, dans lequel les lignes de connexion (25) sont réalisées en un matériau métallique.

6. Écran tactile selon la revendication 1, comprenant en outre une pluralité de canaux de signaux de transmission de commandes tactiles (26) pour alimenter la pluralité de lignes de connexion (25) avec les signaux de transmission de commandes tactiles, chaque canal de signal de transmission de commandes tactiles (26) étant relié à au moins une ligne de connexion (25).

7. Écran tactile selon la revendication 6, comprenant en outre une pluralité de canaux de signaux de détection de commandes tactiles (27) pour acquérir les signaux de détection de commandes tactiles générés à partir des lignes de données (21) servant de lignes de signaux de détection de commandes tactiles, chaque canal de signal de détection de commandes tactiles (27) étant connecté à au moins une ligne de données (21).

8. Écran tactile selon la revendication 7, dans lequel le nombre de canaux de signaux de commandes tactiles (26) et de canaux de signaux de détection de commandes tactiles (27) est déterminé selon une résolution de commande tactile souhaitée.

9. Écran tactile selon la revendication 1, comprenant en outre une pluralité d'éléments de commutation (81) configurés pour fonctionner sélectivement selon que l'écran tactile est en phase d'affichage ou en phase de commande tactile, de sorte que les lignes de données (21) faisant office de lignes de signaux de détection de commandes tactiles reçoivent les signaux de données dans la phase d'affichage et transmettent les signaux de détection de commandes tactiles générés dans la phase de commande tactile.

10. Écran tactile selon la revendication 9, dans lequel chacun de la pluralité d'éléments de commutation (81) est un commutateur analogique.

11. Procédé de transmission de l'écran tactile in-cell selon l'une quelconque des revendications 1 à 10, comprenant :
lorsque l'écran tactile est dans la phase d'affichage, la transmission (S801) des signaux d'électrode communs aux lignes de connexion, et la transmission des signaux de données aux lignes de données ;
dans lequel
lorsque l'écran tactile est dans la phase de commande tactile, la transmission (S802) des signaux de commandes tactiles aux lignes de connexion, et la transmission des signaux de détection de commandes tactiles générés via les lignes de données faisant office de lignes de signaux de détection de commandes tactiles.

12. Dispositif d'affichage comprenant l'écran tactile in-cell selon l'une quelconque des revendications 1 à 10.
